# EUROPEAN PATENT SPECIFICATION

(11) **EP 3 310 880 B1**
(45) Date of publication and mention of the grant of the patent: **11.12.2019**
(21) Application number: 16728763.0
(22) Date of filing: 09.05.2016
(51) Int. Cl.: C01B 3/12, C10L 1/04, C25B 1/00, C25B 3/04, F02B 51/04, F02B 65/00, F02M 25/12, C10G 2/00, C10K 3/04, C25B 1/04, F02M 25/00

(54) **METHOD FOR ON BOARD CONVERSION OF CO2 TO FUEL**
VERFAHREN ZUR UMWANDLUNG VON CO2 IN BRENNSTOFF AN BORD EINES FAHRZEUGES
PROCÉDÉ POUR LA CONVERSION À BORD DU CO2 EN COMBUSTIBLE

(30) Priority: 16.06.2015 US 201562180257 P
(43) Date of publication of application: 25.04.2018
(73) Proprietor: Saudi Arabian Oil Company, Dhahran 31311 (SA)
(72) Inventor: HAMAD, Esam, Zaki, Dhahran 31311 (SA); HAMMAD, Ahmad, Dhahran 31311 (SA); IMRAN, Hasan, Dhahran 31311 (SA)
(74) Representative: Zaccaro, Elisabetta
(86) International application number: PCT/US2016/031473
(87) International publication number: WO 2016/204881

(56) References cited:
- WO-A1-2007/108014
- US-A1- 2013 333 638
- US-A1- 2014 194 539

## Description

### FIELD OF THE INVENTION

The invention relates to a method for using CO₂ produced via an internal combustion engine (ICE), on a moving vehicle to product liquid or gaseous hydrocarbon fuel via electrochemistry. Among the advantages provided by the invention are the ability to use energy in exhaust gas as the energy to convert the CO₂ to liquid or gaseous fuel. Storage of the converted fuel on board the vehicle is also possible

### BACKGROUND AND PRIOR ART

The transportation industry has experienced increasingly stringent regulations, especially in the area of CO₂ emissions from engines, such as e.g., gasoline and diesel engines. Hence, there is increased interest in how to lower the emission of CO₂ and other gases when moving vehicles using any form of internal combustion engine (ICE) are operated.

The prior art shows much more effort in capturing CO₂ from combustion of fuels, when the source of the CO₂ is stationary. Applying the principles of CO₂ capture used for stationary sources, to mobile ones, is not always possible. The limited approaches to CO₂ capture "on board" mobile sources either use pure O₂ for combustion, and provide no means for re-use and regeneration of the agent used to capture the CO₂, and/or do not use waste heat that is also recovered in the process.

Solving the problem of capture and reuse of CO₂ on a moving vehicle for, e.g., generation of usable fuel onboard the vehicle has been viewed as difficult, or at least impractical, because of space limitations, energy and apparatus requirements, and the dynamic nature of a vehicle's operating cycle, e.g., intermittent periods of acceleration, followed by periods of deceleration.

It is a goal of this invention to provide a process for on board use of CO₂ and waste heat, produced by ICEs, with transformation of the CO₂ into liquid or gaseous fuel, which can then be stored, on board, until a suitable facility is reached for removal.

Further, the fuel produced on board can be used as a secondary fuel in dual (or "bi") fuel vehicles.

Dual fuel vehicles operate by using a primary, or main fuel, and a secondary, or pilot fuel. Among the materials suggested as fuels to improve engine performance, and to permit use of fuels involving fewer processing steps, are ethanol, syngas, hydrogen, and methane. These secondary fuels are injected into the cylinder with the main fuel as needed, but generally, to suppress "knock" at higher engine loads.

Also, the secondary fuel can be used in so-called "splash blending," in order to increase the octane level of the main fuel. In turn, the main fuel can be one subjected to less processing, or of a lower octane quality, thus making the engine fuel more cost effective, and allowing for control over NOₓ and soot emissions, in compression ignition engines.

Dual fuel engines have great value for various reasons. Via utilization of waste heat (produced via the ICE), to produce fuel on board, better energy efficiency is achieved. Also, via using the CO₂ produced by the ICE to make a secondary fuel and then using the fuel, storage and offloading systems are no longer needed. On a more "global" level, refineries produce less CO₂ because less primary fuel is needed, and fuel consumption costs are reduced, due to the interaction between the primary and secondary fuels. US 2013/0333638 discloses a method for converting CO₂ produced by an ICE of a moving vehicle into hydrocarbon fuel.

How this is accomplished will be seen in the disclosure which follows.

### BRIEF INSCRIPTION OF THE DRAWINGS

Figures 1a - 1d present block diagrams of the process of the invention, using high temperature chemical reactors.
Figures 2a - 2d present block diagrams of the process of the invention using low temperature electrochemical reactors.
Figure 3 shows generally how a solid oxide electrolysis cell ("SOEC"), functions to carry out steam electrolysis.

### DETAILED DESCRIPTION OF PREFERRED EMBODIMENTS

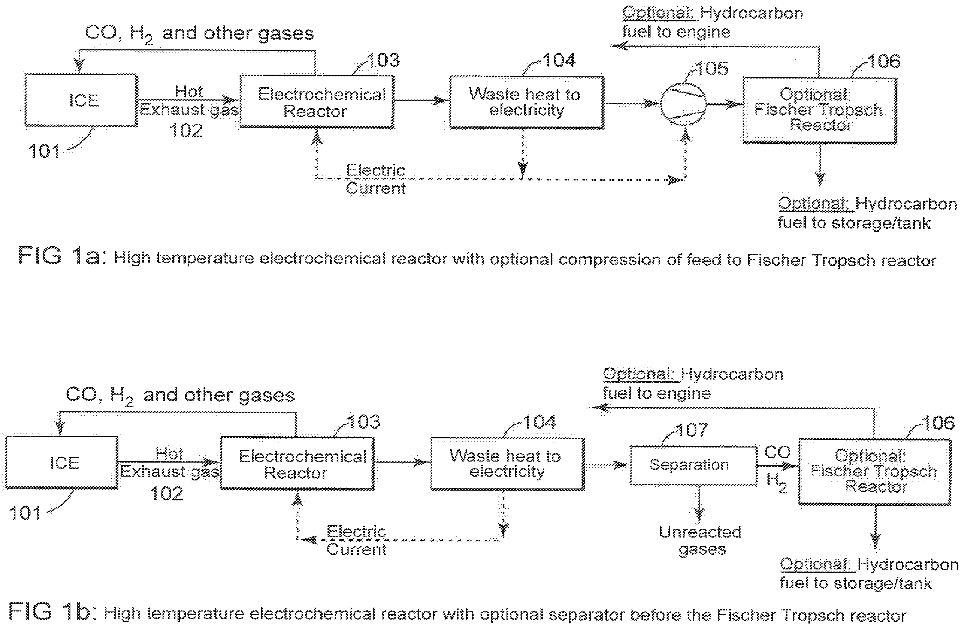

Referring now to Figures 1a - 1d, an ICE "101" is shown, which is a source of exhaust gas, which is shown by 102. In the embodiments shown in Figures 1a and 1b, CO₂ is not separated from the exhaust gas, all of which moves to an electrochemical reactor 103. Electrochemical reactors are known which require either high or low temperatures to function. In Figures 1a and 1b, high temperature reactors are used, and hence, the hot exhaust gas moves directly to the reactor, to provide the required heat. "High temperature" as used herein refers to temperatures above 400°C and up to about 900°C. A source of electrical current (not shown) provides current to both the electrochemical rector 103 and, in the case of Figure 1a, to a compressor 105, discussed briefly *infra.*

At 103, water can be added but, in the case of most exhaust gases, is already present. At the electrochemical generator, the majority of the reaction products are CO and H₂, in the mixture known as "syngas." As is shown in Figures 1a and 1b, these, and other gases, are channeled back to the ICE to serve as fuel. If operation of the system disclosed herein does not yield enough syngas, one may channel additional electricity from, e.g., the battery or alternator.

Both of Figures 1a and 1b show that the waste heat, i.e., the heat energy from the exhaust gas, can be used to generate electricity at a thermoelectric generator 104. To elaborate, a heat transfer surface is integrated into thermo electric materials, to reduce resistance to heat transfer and to increase conversion efficiency. The electricity produced here can be used to power the electrochemical reactor 103, or in other optional embodiments discussed herein.

As noted, *supra,* Figure 1a includes a compressor, which can be used when further reactions are desired. If, e.g., a Fischer Tropsch reactor 106 is used and H₂ and CO are channeled thereto, the compressor is used because pressure conditions for the Fischer Tropsch reactions to take place may vary. The temperature necessary for the reaction is well known to range from 150 - 300°C. This requires removal of heat from the exhaust gas, as is discussed herein, and at the heat transfer surface, referred to *supra.*

The compressor is an optional apparatus, to be used when one wishes to operate the Fischer Tropsch reactor at pressures above atmospheric pressure. While increased pressures increase the conversion rate, i.e., the production of hydrocarbons, long chain alkanes result, and these solids are undesirable. Gas moves to the compressor from 104 via transport means 110. it should be noted that this gas has lost heat which has been converted to electricity. As noted, *supra,* a compressor is needed at higher pressures. Thus, the system of Figure 1a can be so used, while that of Figure 1b requires the use of a compressor inserted between Fischer Tropsch reactor 106 and separation unit 107. As this is optional, it is not shown.

As is shown in Figure 1a and 1b, following reaction, the hydrocarbon products can be directed back to the ICE, or stored on board.

It is to be noted that the Fischer Tropsch reaction discussed herein is optional, and neither compressor 105 nor reactor 106 are required by the invention.

Figure 1b differs from Figure 1a in showing a further, optional separation step, by which gases other than CO and H₂ (e.g., N₂, H₂O, and CO₂) are removed, using known processes, leaving only CO and H₂ to move to the Fischer Tropsch reactor. Such separation facilitates the reactions at the Fischer Tropsch reactor.

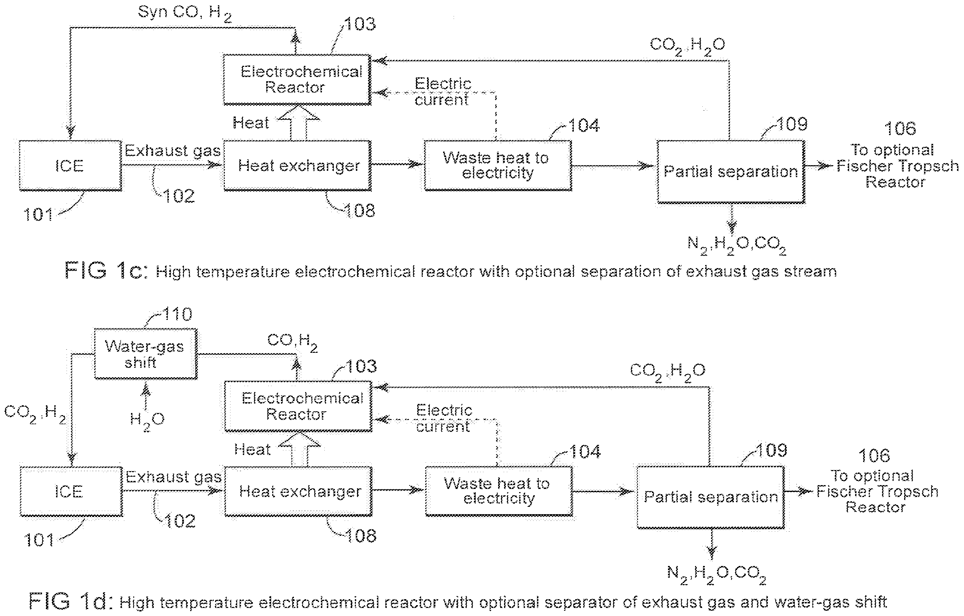

Figure 1c and 1d depict additional embodiments of the invention embodied in Figures 1a and 1b. As with Figures 1a and 1b, these figures show the use of high temperature chemical reactions, where heat energy from exhaust gas passes through a heat exchange 108, and is used to heat the electrochemical reactor. Additional heat is converted to electricity, as in Figures 1a and 1b, and the resulting electricity is used to power the reactor.

Figures 1c and 1d both differ from Figures 1a and 1b in effecting partial separation of the components of the exhaust gas at 109 and transporting some of CO₂ and H₂O to the electrochemical reactor, transporting some of these components to the Fischer Tropsch reactor if it is used, and removing the N₂. Via selection of, e.g., particular separation membranes, the degree of separation of CO₂ and H₂O from other materials can be controlled by the skilled artisan.

Figure 1d shows an additional optional embodiment, a means for a water gas shift 110, where H₂O is added to the CO and H₂, resulting in production of more H₂, and conversion of toxic CO to less noxious CO₂. Adding more H₂ increases the octane number of the resulting product.

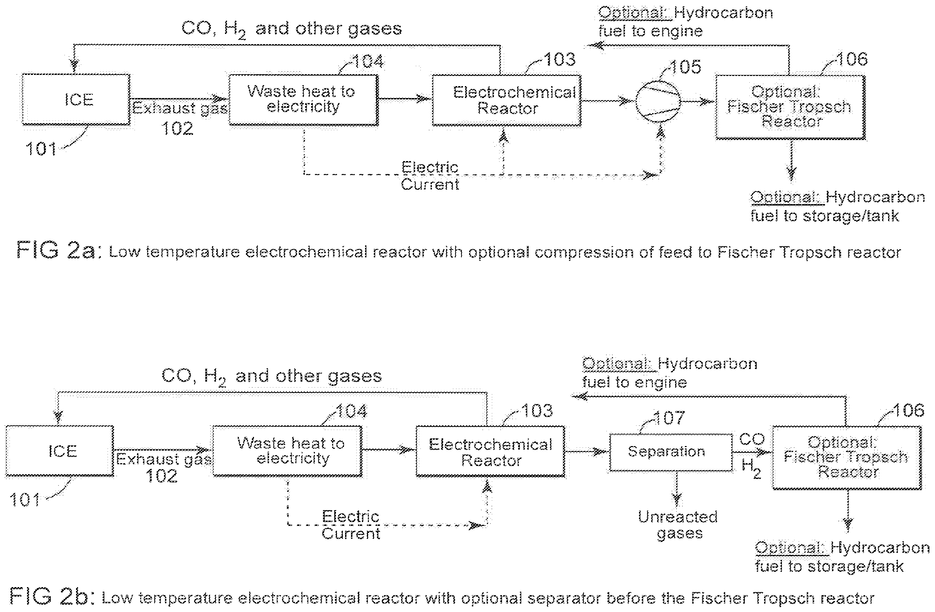

Figures 2a - 2d parallel Figures 1a - 1d, except that they employ a low temperature electrochemical reactor. "Low temperature" as used herein refers to reactors which operate at temperatures from room temperature to 400°C. While heat, as from, e.g., the exhaust gas is not essential to the operation of the electrochemical reactor, high temperatures are not so the order of items "104" and "103" is reversed in the process.

The reactions which take place in the reactor, discussed *infra,* lead to the production of one or more of liquid hydrocarbon fuel, syngas, hydrocarbon gas, or a liquid oxygenate, which is stored on board the vehicle, and which may then be offloaded at, e.g., a gas station or other appropriate depot. As noted *supra,* these products may also be used on the moving vehicles.

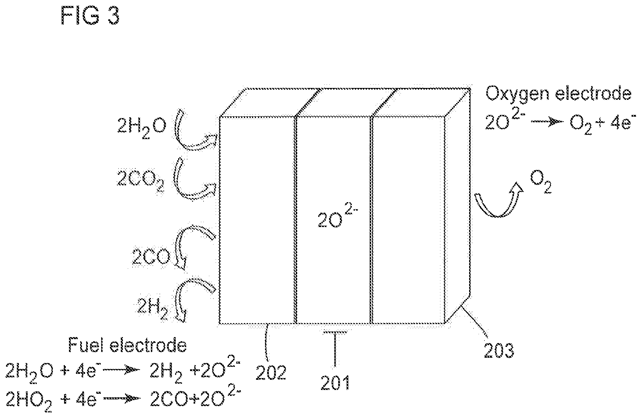

Figure 3 depicts, generally, what occurs in the electro-chemical reactor. A solid oxide electrolysis cell ("SOEC") 20 1 is depicted, showing a mixture of CO₂ and H₂O.

The SOEC displays a cathode 202 and an anode 203, where a series of "preliminary" reactions occur, followed by reactions which yield hydrocarbon fuels.

Within the electrode, water reacts with the anode, such that H⁺ and O²⁻ species are formed. At the anode, the reaction:

2 O²⁻ → O₂ + 4e⁻

takes place. Meanwhile, at the cathode the H⁺ species becomes H₂, while CO₂ is reduced to CO, permitting the reaction:

(2n+1)H₂ + nCO → CnH₍₂ₙ₊₂₎ + nH₂O

to take place. Most of the product will be the mix of H₂ and CO referred to as syngas, and this can be stored on board the moving vehicle until such time as it is combined with primary fuel, or off loaded. CₙH(₂ₙ₊₂₎ is the formula for various hydrocarbon fuels. Further reactions can also take place, resulting in, e.g., methanol, dimethylether, both of which have roles as synthetic fuels. Other, larger molecules can result if, e.g., a Fischer Tropsch or other suitable reactor is employed.

Exemplary reactions which take place within the reactor are:

CO₂ + 2H⁺ + 2e⁻ → CO + H₂O

CO₂ + 8H⁺ + 8e⁻ → CH₄ + 2H₂O

2CO₂ + 12H⁺ + 12e⁻ → C₂H₄ + 4H₂O

2CO₂ + 6H⁺ + 6e⁻ → CH₃OH + H₂O

CO₂ + 2H⁺ + 2e⁻ → HCOOH

see, e.g., Beck et al., Electrochemical Conversion of Carbon Dioxide to Hydrocarbon Fuels, EME580 (Spring, 2010),

In general, the following reaction is a "guide":

CO₂ + 2H₂O → Fuel + 2O₂

Specific features of the invention, which are relevant, include the use of energy recovered from the exhaust gases, and the absence of any source for an external air stream.

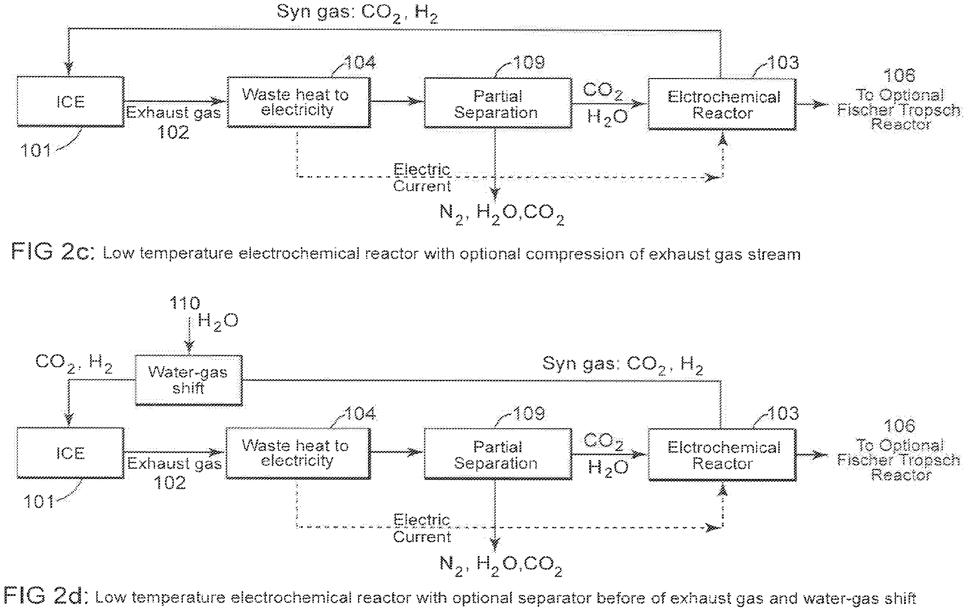

Referring back to Figures 1 and 2, it will be seen that the electrochemical reactor is supplied with electrical energy from, e.g., a thermoelectric generator.

Hydrocarbon fuels produced in the reactor are immiscible with water, and are separated therefrom easily, as liquid fuel. This liquid fuel is moved to a storage container means, until such point as the moving vehicle reaches a site, such as a gas station, where it can be off loaded.

Specific features of the invention which are relevant include the use of energy recovered from the exhaust gases, and the absence of any source for an external air stream.

## Claims

1. A method for converting CO₂ produced by an internal combustion engine (ICE) on a moving vehicle into hydrocarbon fuel, comprising:
(i) transporting exhaust gas containing CO₂ and produced by said ICE to a heat exchanger to remove excess heat from said gas to form a heat exchanged exhaust gas and moving said heat exchanged exhaust gas to a CO₂ separator to remove CO₂ therefrom, by contacting said heat exchanged exhaust gas with a CO₂ separator which is a membrane permeable to CO₂ and gaseous H₂O but not other gases present in said exhaust gas produced by said ICE; and
(iii) combining said CO₂ with water in an electrochemical reactor to form hydrocarbon fuel.

2. The method of claim 1, further comprising transporting said hydrocarbon fuel to a storage means.

3. The method of claim 1, wherein said heat exchanger is a thermometric cell, a Rankin cycler or a sterling engine.

4. The method of claim 1, further comprising supplying electrical energy from an electrical generator to said electrochemical reactor.

5. The method of claim 4, further comprising supplying heat energy from said heat exchanger to said electrochemical reactor.

6. The method of claim 1, further comprising producing H₂ at said electrochemical reactor.

7. The method of claim 1, further comprising mixing said hydrocarbon fuel produced at said electrochemical generator with a primary fuel for said ICE.

## Patentansprüche

1. Verfahren zum Umwandeln von CO₂, das in einem Verbrennungsmotor in einem sich bewegenden Fahrzeug erzeugt wird, in Kohlenwasserstoff Treibstoff, aufweisend:
(i) Transportieren eines Abgases, das CO₂ enthält und von dem Verbrennungsmotor produziert wird, zu einem Wärmetauscher, um dem Gas überschüssige Wärme zu entziehen, um ein Abgas, dem Wärme ausgetauscht wurde, zu bilden, und zuführen des Abgas, dem Wärme ausgetauscht wurde, zu einem CO₂ Abscheider, um von diesem CO₂ abzuscheiden, indem das Abgas, dem Wärme ausgetauscht wurde, mit einem CO₂ Abscheider in Kontakt gebracht wird, der eine Membran ist, die für CO₂ und gasförmiges H₂O durchlässig ist, nicht aber für andere Gase, die im Abgas, das vom Verbrennungsmotor produziert wird, enthalten sind; und
(iii) Kombinieren des CO₂ mit Wasser in einem elektrochemischen Reaktor, um Kohlenwasserstoff Treibstoff zu bilden.

2. Verfahren nach Anspruch 1, das weiter das Transportieren des Kohlenwasserstoff Treibstoffs zu einer Speichervorrichtung aufweist.

3. Verfahren nach Anspruch 1, wobei der Wärmetauscher eine thermometrische Zelle ist, eine Rankin-Kreisprozess-Vorrichtung oder ein Sterling Motor ist.

4. Verfahren nach Anspruch 1, das weiter das Bereitstellen von elektrischer Energie aus einem elektrischen Generator an den elektrochemischen Reaktor aufweist.

5. Verfahren nach Anspruch 4, das weiter das Bereitstellen von Wärmeenergie von dem Wärmetauscher an den elektrochemischen Reaktor aufweist.

6. Verfahren nach Anspruch 1, das weiter das Herstellen von H₂ in dem elektrochemischen Reaktor aufweist.

7. Verfahren nach Anspruch 1, das weiter ein Mischen des Kohlenwasserstoff Treibstoffs, der in dem elektrochemischen Reaktor produziert worden ist, mit Primärtreibstoff für den Verbrennungsmotor, aufweist.

## Revendications

1. Procédé pour la conversion du CO₂ produit par un moteur à combustion interne (MCI) sur un véhicule en mouvement en combustible à base d'hydrocarbures, consistant à :
(i) transporter un gaz d'échappement contenant du CO₂ et produit par ledit MCI vers un échangeur de chaleur pour éliminer la chaleur en excès dudit gaz pour former un gaz d'échappement à chaleur échangée et déplacer ledit gaz d'échappement à chaleur échangée vers un séparateur de CO₂ pour éliminer le CO₂ de celui-ci, par la mise en contact dudit gaz d'échappement à chaleur échangée avec un séparateur de CO₂ qui est une membrane perméable au CO₂ et à H₂O gazeux mais pas aux autres gaz présents dans ledit gaz d'échappement produit par ledit MCI ; et
(iii) combiner ledit CO₂ avec de l'eau dans un réacteur électrochimique pour former un combustible à base d'hydrocarbures.

2. Procédé selon la revendication 1, consistant en outre à transporter ledit combustible à base d'hydrocarbures vers un moyen de stockage.

3. Procédé selon la revendication 1, dans lequel ledit échangeur de chaleur est une cellule thermométrique, un cycleur Rankin ou un moteur Stirling.

4. Procédé selon la revendication 1, consistant en outre à fournir de l'énergie électrique d'un générateur électrique audit réacteur électrochimique.

5. Procédé selon la revendication 4, consistant en outre à fournir de l'énergie calorifique dudit échangeur de chaleur audit réacteur électrochimique.

6. Procédé selon la revendication 1, consistant en outre à produire du H₂ au niveau dudit réacteur électrochimique.

7. Procédé selon la revendication 1, consistant en outre à mélanger ledit combustible à base d'hydrocarbures produit au niveau dudit générateur électrochimique avec un combustible primaire pour ledit MCI.
